# EUROPÄISCHE PATENTSCHRIFT

(11) **EP 3 766 213 B1**
(45) Veröffentlichungstag und Bekanntmachung des Hinweises auf die Patenterteilung: **18.01.2023**
(21) Anmeldenummer: 19709440.2
(22) Anmeldetag: 05.03.2019
(51) Int. Cl.: H04L 12/40, H04L 25/03, H04L 25/08

(54) **SENDE-/EMPFANGSEINRICHTUNG FÜR EIN BUSSYSTEM UND VERFAHREN ZUR REDUKTION VON LEITUNGSGEBUNDENEN EMISSIONEN**
TRANSMITTING/RECEIVING DEVICE FOR A BUS SYSTEM AND METHOD FOR REDUCING LINE-CONDUCTED EMISSIONS
DISPOSITIF D'ÉMISSION/RÉCEPTION POUR UN SYSTÈME DE BUS ET PROCÉDÉ DE RÉDUCTION D'ÉMISSIONS FILAIRES

(30) Priorität: 12.03.2018 DE 102018203671
(43) Veröffentlichungstag der Anmeldung: 20.01.2021
(73) Patentinhaber: Robert Bosch GmbH, 70442 Stuttgart (DE)
(72) Erfinder: WALKER, Steffen, 72770 Reutlingen (DE); STEGEMANN, Sebastian, 72074 Tuebingen (DE)
(86) Internationale Anmeldenummer: PCT/EP2019/055361
(87) Internationale Veröffentlichungsnummer: WO 2019/174956

(56) Entgegenhaltungen:
- EP-A1- 0 533 971
- DE-A1-102014 204 048
- DE-A1-102016 100 176

## Beschreibung

Die vorliegende Erfindung betrifft eine Sende-/Empfangseinrichtung für ein Bussystem und ein Verfahren zur Reduktion von leitungsgebundenen Emissionen. Das Bussystem ist insbesondere ein CAN und/oder CAN FD Bussystem. Die Sende-/Empfangseinrichtung ist insbesondere in einem CAN oder CAN FD Bussystem einsetzbar, und setzt geschaltete Stand-Off-Vorrichtungen in der Sendestufe, genauer gesagt ihrem Sendeblock, ein, um eine Reduktion von leitungsgebundenen Emissionen zu bewirken.

### Stand der Technik

Bei einem CAN-Bussystem werden Nachrichten mittels des CAN- und/oder CAN FD Protokolls übertragen. Das CAN-Bussystem findet insbesondere Verwendung bei der Kommunikation zwischen Sensoren und Steuergeräten in einem Fahrzeug oder einer technischen Produktionsanlage, usw.. Bei einem CAN FD-Bussystem ist eine Datenübertragungsrate von größer 1 MBit pro Sekunde (1 Mbps) möglich, beispielsweise von 2 Mbit/s, 5 Mbit/s, oder einer beliebigen anderen Datenübertragungsrate von größer 1 Mbit/s usw.. Zudem ist ein CAN-HS-Bussystem (HS = Hochgeschwindigkeit = Highspeed) bekannt, bei welchem eine Datenübertragungsrate von bis zu 500 kbit pro Sekunde (500 kbps) möglich ist.

Für die Datenübertragung in einem CAN-Bussystem fordert die heutige CAN-Physical-Layer ISO11898-2:2016 als CAN Protokoll-Spezifikation mit CAN FD eine Einhaltung vorbestimmter Parameter. Neben der Einhaltung von funktionalen Parametern wird die Abstrahlung (Emission), die Störfestigkeit (Direct Pin Injection - DPI) und der Schutz gegen elektrostatische Entladung (ESD = electrostatic discharge) betrachtet.

Problematisch ist, dass bei CAN-FD mit 2 Mbit/s und 5 Mbit/s die Bitrate im Vergleich zum klassischen CAN bei 500 kbit/s um das 4 - bzw. 10-Fache erhöht wird, jedoch vorgegeben ist, auch bei CAN FD die gleichen Emissionsgrenzen einzuhalten wie bei CAN. Dies stellt für die Erfüllung der Anforderungen zur Einhaltung der Parameter für die leitungsgebundene Emission eine massive Herausforderung dar.

Die leitungsgebundene Emission von CAN- oder CAN FD-Transceivern bzw. CAN- oder CAN FD-Sende-/Empfangseinrichtungen wird entsprechend der 150Ohm-Methode (IEC 61967-4, Integrated circuits, Measurement of electromagnetic emissions, 150 kHz to 1 GHz - Part 4: Measurement of conducted emissions - 1/150 direct coupling method) und gemäß IEC 62228 (EMC evaluation of CAN Transceivers) gemessen. Bei der Emissionsmessung wird ein heruntergeteiltes Wechselspannungssignal auf den beiden Busleitungen (CAN_H und CAN_L) bewertet.

In dem Dokument "IEC TS 62228 Integrated circuits - EMC evaluation of CAN transceivers" ist der Aufbau bei der EMV-Messung festgeschrieben. Dabei werden drei Sende-/Empfangseinrichtungen am gleichen CAN-Bus mit einem gemeinsamen 60Ohm Abschlusswiderstand und einem Auskoppelnetzwerk betrieben. Eine der Sende-/Empfangseinrichtungen sendet ein Sendesignal, die anderen Sende-/Empfangseinrichtungen befinden sich im gleichen Betriebsmodus, senden jedoch kein dominantes Bit oder keinen dominanten Signalzustand, so dass die Sendesignale dieser anderen Sende-/Empfangseinrichtungen high = rezessiv sind.

Die technische Herausforderung besteht darin, die geforderten Grenzwerte bei leitungsgebundener Abstrahlung nicht zu überschreiten (gemäß IEC62228).

DE 10 2014 204 048 A1 zeigt eine Teilnehmerstation für ein Bussystem für beispielsweise CAN FD, wobei eine Sende-/Empfangseinrichtung zum Ein- oder Ausschalten einer Emissionssteuereinrichtung abhängig von der Arbitrierungsphase und des Datenbereichs einer Nachricht in dem Bussystem ausgestaltet ist.

### Offenbarung der Erfindung

Daher ist es Aufgabe der vorliegenden Erfindung, eine Sende-/Empfangseinrichtung für ein CAN Bussystem und ein Verfahren zur Reduktion von leitungsgebundenen Emissionen bereitzustellen, welche die zuvor genannten Probleme lösen.

Die Aufgabe wird durch eine Sende-/Empfangseinrichtung für ein CAN Bussystem mit den Merkmalen von Anspruch 1 gelöst. Die Sende-/Empfangseinrichtung umfasst eine Sendestufe zum Senden eines Sendesignals an eine erste Busader eines Busses des Bussystems, bei welchem Bussystem zumindest zeitweise ein exklusiver, kollisionsfreier Zugriff einer Teilnehmerstation auf den Bus des Bussystems gewährleistet ist, und zum Senden des Sendesignals an eine zweite Busader des Busses, eine Empfangsstufe zum Empfangen des auf den Busadern übertragenen Bussignals, und eine Emissionsreduktionseinheit zur Steuerung eines Einschaltpfads einer ersten Stand-Off-Vorrichtung in der Sendestufe abhängig davon, ob ein dominanter Zustand des Sendesignals auftritt oder nicht, wie in Anspruch 1 beschrieben.

Mit der beschriebenen Sende-/Empfangseinrichtung wird die Abstrahlung, insbesondere von Störstrahlung, massiv verringert, insbesondere um einige dBµV. Dadurch ist die leitungsgebundene Emission reduziert und die elektromagnetische Verträglichkeit (EMV) der Sende-/Empfangseinrichtung verbessert. Die Erfindung hilft, die Emission der Sende-/Empfangseinrichtung bei CAN-FD-Bitraten zu reduzieren und liefert einen großen Beitrag auf dem Weg zur Einhaltung der Grenzwerte.

Außerdem kann eine Erhöhung der Symmetrie der beiden Busadern bezüglich der Impedanz erreicht werden.

Als weiteren Vorteil bewirkt die beschriebene Sende-/Empfangseinrichtung, dass keine zusätzliche Kapazität an die Busadern einer Busleitung für den Bus gebracht wird. Stattdessen verringert die Sende-/Empfangseinrichtung die Kapazität kleinsignalmäßig sogar.

Die Wirkung der Sende-/Empfangseinrichtung ist besonders vorteilhaft bei der Verwendung einer Gleichtaktdrossel, die üblicherweise einen Induktivitätswert von 100µH hat, da bei dieser mit einer herkömmlichen Sende-/Empfangseinrichtung besonders stark überhöhte Abstrahlpegel auftreten.

Vorteilhafte weitere Ausgestaltungen der Sende-/Empfangseinrichtung sind in den abhängigen Ansprüchen beschrieben.

Die Emissionsreduktionseinheit ist insbesondere zur Steuerung des wirksamen Widerstands zur Masse für den Einschaltpfad der P-Kanal-Stand-Off- Vorrichtung ausgestaltet.

In einer Ausgestaltung hat die Sendestufe einen ersten Sendeblock zum Senden des Sendesignals an die erste Busader und einen zweiten Sendeblock zum Senden des Sendesignals an die zweite Busader, wobei die erste Stand-Off-Vorrichtung in den ersten Sendeblock geschaltet ist.

Denkbar ist, dass die erste Stand-Off-Vorrichtung ein P-Kanal-Stand-Off-Transistor ist, wobei die Emissionsreduktionseinheit zur Steuerung des Gates des P-Kanal-Stand-Off-Transistors ausgestaltet ist.

Denkbar ist außerdem in dem zweiten Sendeblock eine zweite Stand-Off-Vorrichtung vorzusehen, die kleiner ist als die erste Stand-Off-Vorrichtung, die in dem ersten Sendeblock vorgesehen ist. Hierbei ist die zweite Stand-Off-Vorrichtung möglicherweise ein N-Kanal-Stand-Off-Transistor.

Gemäß einer speziellen Ausgestaltung hat die Emissionsreduktionseinheit einen Logikblock zum Auswerten des Sendesignals und eines von dem Bus empfangenen Signals, einen Widerstand, der an einem Ende mit einem Gate der Stand-Off-Vorrichtung und an seinem anderen Ende mit Masse verbunden ist, und einen Schalter zum Schalten des Gates der Stand-Off-Vorrichtung abhängig von dem Auswerteergebnis des Logikblocks derart, dass das Gate der Stand-Off-Vorrichtung entweder mittels des Schalters niederohmig nach Masse gezogen wird oder über den Widerstand hochohmig nach Masse gezogen wird.

Hierbei kann der Logikblock ausgestaltet sein, den Schalter anzusteuern, den Einschaltpfad der Stand-Off-Vorrichtung niederohmig nach Masse zu ziehen, wenn ein dominanter Zustand des Sendesignals auftritt, wobei der Logikblock ausgestaltet ist, den Schalter anzusteuern, den Einschaltpfad der Stand-Off-Vorrichtung hochohmig nach Masse zu ziehen, wenn ein rezessiver Zustand des Sendesignals auftritt und die Sende-/Empfangseinrichtung für eine empfangende jedoch nicht sendende Teilnehmerstation betrieben wird.

Hierbei kann der Schalter ein Transistor sein, der einen niederohmigeren Widerstandswert hat als der Widerstand, und wobei der Ausgang des Logikblocks an das Gate des Transistors angeschlossen ist.

Möglicherweise ist die Sende-/Empfangseinrichtung eine CAN FD Sende-/Empfangseinrichtung.

Die zuvor beschriebene Sende-/Empfangseinrichtung kann Teil eines Bussystems sein, das einen Bus, und mindestens zwei Teilnehmerstationen aufweist, welche über den Bus derart miteinander verbunden sind, dass sie miteinander kommunizieren können. Hierbei weist mindestens eine der mindestens zwei Teilnehmerstationen eine zuvor beschriebene Sende-/Empfangseinrichtung auf.

Die zuvor genannte Aufgabe wird zudem durch ein Verfahren zur Reduktion von leitungsgebundenen Emissionen mit den Merkmalen von Anspruch 12 gelöst. Das Verfahren wird mit einer Sende-/Empfangseinrichtung für ein Bussystem ausgeführt, bei welchem zumindest zeitweise ein exklusiver, kollisionsfreier Zugriff einer Teilnehmerstation auf einen Bus des Bussystems gewährleistet ist. Hierbei weist die Sende-/Empfangseinrichtung eine Sendestufe, eine Empfangsstufe und eine Emissionsreduktionseinheit auf, wobei das Verfahren die Schritte aufweist: Senden, mit der Sendestufe, eines Sendesignals an eine erste Busader des Busses, Senden des Sendesignals an eine zweite Busader des Busses, Empfangen, mit der Empfangsstufe, des auf den Busadern übertragenen Bussignals, und Steuern, mit der Emissionsreduktionseinheit, eines Einschaltpfads einer ersten Stand-Off-Vorrichtung in der Sendestufe abhängig davon, ob ein dominanter Zustand des Sendesignals auftritt oder nicht, wie in Anspruch 12 beschrieben.

Das Verfahren bietet dieselben Vorteile, wie sie zuvor in Bezug auf die Sende-/Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaltbild einer Sendestufe einer Sende-/Empfangseinrichtung in dem Bussystem gemäß dem ersten Ausführungsbeispiel;
Fig. 3 ein Schaltbild eines Auskoppelnetzwerks für eine Emissionsmessung einer Sende-/Empfangseinrichtung in dem Bussystem gemäß dem ersten Ausführungsbeispiel;
Fig. 4 einen zeitlichen Verlauf eines transienten Auskoppelsignals für Emission bei einer ersten Sende-/Empfangseinrichtung gemäß dem ersten Ausführungsbeispiel;
Fig. 5 einen zeitlichen Verlauf eines transienten Auskoppelsignals für Emission bei einer zweiten Sende-/Empfangseinrichtung gemäß dem ersten Ausführungsbeispiel;
Fig. 6 ein Frequenzspektrum bei der ersten Sende-/Empfangseinrichtung gemäß dem ersten Ausführungsbeispiel; und
Fig. 7 ein Frequenzspektrum bei der zweiten Sende-/Empfangseinrichtung gemäß dem ersten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

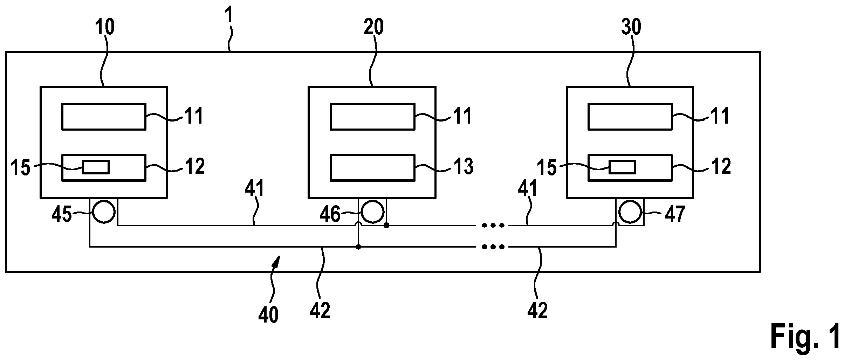

Fig. 1 zeigt ein Bussystem 1, das beispielsweise zumindest abschnittsweise ein CAN-Bussystem, ein CAN-FD-Bussystem, usw., sein kann. Ganz allgemein ist das Bussystem 1 ein serielles Bussystem, bei welchem ein Buszustand, insbesondere der dominante Pegel eines Sendesignals, aktiv getrieben wird. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 werden bei einem CAN-Bussystem für Signale für CAN_H und CAN_L verwendet und dienen zur Einkopplung der dominanten Pegel im Sendezustand. Über den Bus 40 sind Nachrichten 45, 46, 47 in der Form der genannten Signale zwischen den einzelnen Teilnehmerstationen 10, 20, 30 übertragbar. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12.

Die Sende-/Empfangseinrichtungen 12 umfassen jeweils eine Emissionsreduktionseinheit 15. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstation 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sende-/Empfangseinrichtung 12 dient zum Senden und Empfangen der Nachrichten 45, 47 in Form von Signalen und nutzt hierbei die Emissionsreduktionseinheit 15, wie später noch ausführlicher beschrieben. Die Kommunikationssteuereinrichtung 11 kann insbesondere wie ein herkömmlicher CAN-FD-Controller und/oder CAN-Controller ausgeführt sein. Die Sende-/Empfangseinrichtung 12 kann ansonsten insbesondere wie ein herkömmlicher CAN-Transceiver und/oder CAN-FD-Transceiver ausgeführt sein. Die Sende-/Empfangseinrichtung 13 dient zum Senden und Empfangen der Nachrichten 46 in Form von Signalen. Ansonsten kann die Sende-/Empfangseinrichtung 13 wie ein herkömmlicher CAN-Transceiver ausgeführt sein.

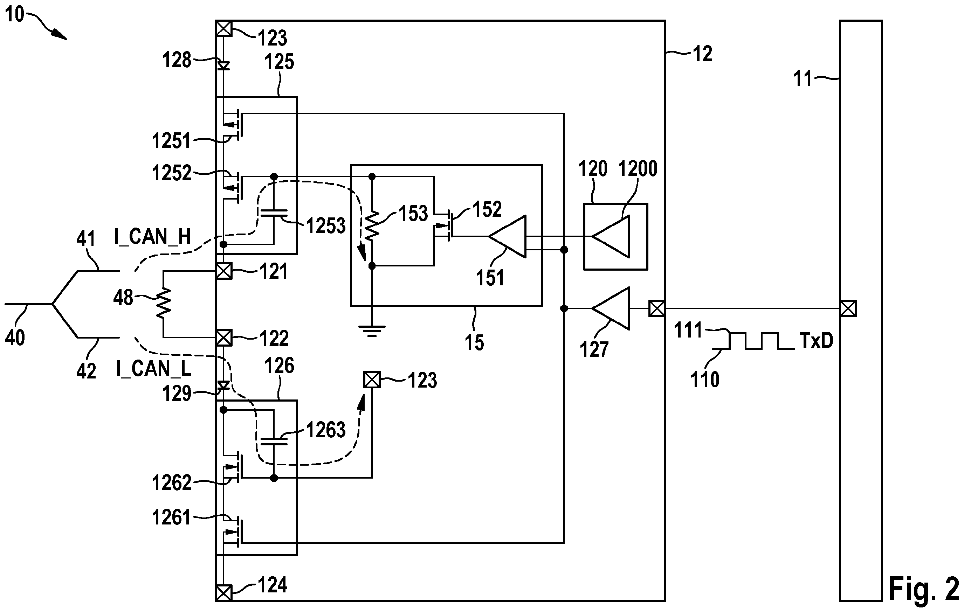

Fig. 2 zeigt den grundlegenden Aufbau der Sende-/Empfangseinrichtung 12 mit der Emissionsreduktionseinheit 15. Die Sende-/Empfangseinrichtung 12 ist an Anschlüssen 121, 122 an den Bus 40, genauer gesagt dessen erste Busader 41 für CAN_H und dessen zweite Busader 42 für CAN_L angeschlossen. Auf dem Bus 40 stellt sich infolge der Bussignale CAN_H, CAN_L ein differenzielles Bussignal VDIFF = CAN_H - CAN_L ein. Die Busadern 41, 42 sind an ihrem Ende mit einem Abschlusswiderstand 48 terminiert, wie in Fig. 2 nur sehr schematisch angedeutet. An der Sende-/Empfangseinrichtung 12 erfolgt die Spannungsversorgung, insbesondere CAN-Supply, für die erste und zweite Busader 41, 42 über mindestens einen Anschluss 123. Die Verbindung der Sende-/Empfangseinrichtung 12 mit Masse bzw. CAN_GND ist über einen Anschluss 124 realisiert.

Die erste und zweite Busader 41, 42 sind bei der Sende-/Empfangseinrichtung 12 mit einer Sendestufe verbunden, die auch als Transmitter bezeichnet wird und Sendeblöcke 125, 126 aufweist. Auch wenn dies in Fig. 2 nicht detailliert dargestellt ist, sind die erste und zweite Busader 41, 42 bei der Sende-/Empfangseinrichtung 12 außerdem mit einer Empfangsstufe 120 verbunden, die auch als Receiver bezeichnet wird. In Fig. 2 sind nur die Elemente der Sendestufe genauer dargestellt, wohingegen die Empfangsstufe 120 mit ihrem Empfangskomparator 1200 nur sehr schematisch dargestellt ist, da deren genauer Aufbau bereits bekannt ist und zur Erläuterung des vorliegenden Ausführungsbeispiels nicht benötigt wird.

Mit den Sendeblöcken 125, 126, und damit mit der Sendestufe, ist eine Treiberschaltung 127 zum Treiben eines Sendesignals TxD verbunden, das von der Kommunikationssteuereinrichtung 11 erzeugt und an die Sende-/Empfangseinrichtung 12 ausgegeben wird. Das Sendesignal TxD wird auch als TxD-Signal bezeichnet. Das Sendesignal TxD kann je nach zu übermittelnder Information unterschiedliche Spannungszustände, insbesondere einen rezessiven Zustand 110 oder einen dominanten Zustand 111, haben.

Gemäß Fig. 2 hat die Sendestufe einen ersten Sendeblock 125 für das Signal CAN_H für die erste Busader 41 und einen zweiten Sendeblock 126 für das Signal CAN_L für die zweite Busader 42. Außerdem hat die Sendestufe eine Verpolschutzdiode 128 zwischen dem Anschluss 123 für die Spannungsversorgung und dem ersten Sendeblock 125. Zwischen den Anschluss 122 für die zweite Busader 42 und den zweiten Sendeblock 126 ist eine Verpolschutzdiode 129 geschaltet.

Der erste Sendeblock 125 hat einen Niedervolt-PMOS-Transistor 1251 (PMOS = P-Ieitender Metall-Oxid-Halbleiter) und einen P-Kanal-Hochvolt-Stand-Off-Transistor 1252, die in Reihe geschaltet sind. Zwischen Gate und Drain des P-Kanal-Hochvolt-Stand-Off-Transistors 1252 bildet sich eine parasitäre Kapazität 1253 aus. Die Kapazität 1253 wird auch als Gate-Drain-Kapazität des P-Kanal-Hochvolt-Stand-Off-Transistors 1252 bezeichnet. Die Kapazität 1253 bildet sich somit zwischen dem Gate des Transistors 1252 und dem Anschluss 121 für die erste Busader 41 aus.

Der zweite Sendeblock 126 hat einen Niedervolt-NMOS-Transistor 1261 (NMOS = N-Ieitender Metall-Oxid-Halbleiter) und einen N-Kanal-Hochvolt-Stand-Off-Transistor 1262, die in Reihe geschaltet sind. Zwischen Gate und Drain des N-Kanal-Hochvolt-Stand-Off-Transistors 1252 bildet sich eine parasitäre Kapazität 1263 aus. Die Kapazität 1263 wird auch als Gate-Drain-Kapazität des N-Kanal-Hochvolt-Stand-Off-Transistors 1262 bezeichnet. Die Kapazität 1263 bildet sich somit zwischen dem Gate des Transistors 1262 und der Kathode der Verpolschutzdiode 129 aus, die für den Anschluss 122 für die zweite Busader 41 vorgesehen ist.

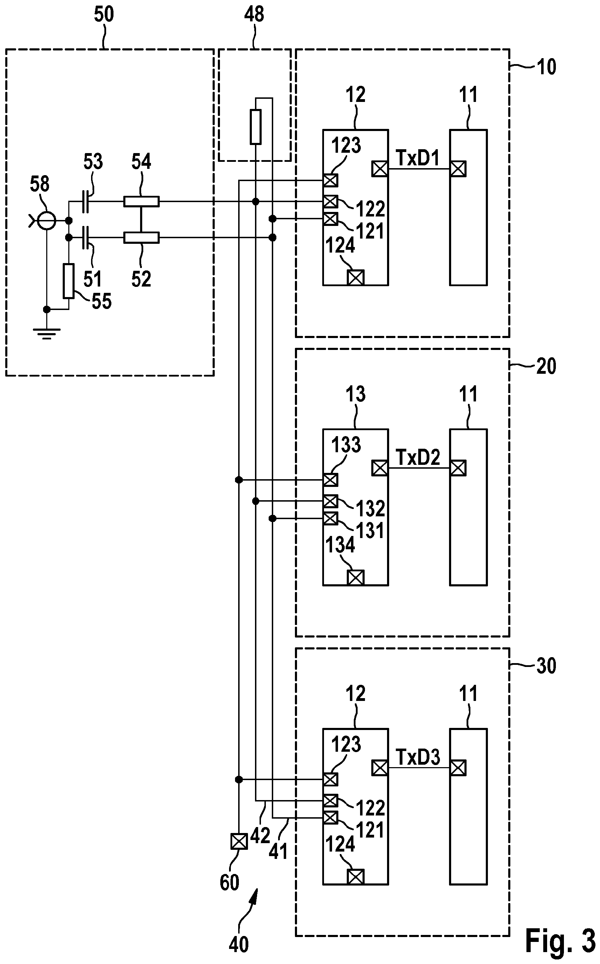

Sendet eine der Teilnehmerstationen 20, 30 ein Sendesignal TxD auf den Bus 40, verursacht die Dynamik der Signale von der sendenden Teilnehmerstationen 20, 30 die Ströme I_CAN_H, I_CAN_L in die Busanschlüsse 121, 122 der empfangenden Sende-/Empfangseinrichtung 12 der Teilnehmerstation 10. Dabei fließen die Ströme I_CAN_H, I_CAN_L hauptsächlich über die parasitären Gate-Drain-Kapazitäten 1253, 1263 der zugehörigen Stand-off-Transistoren 1252, 1262 an den Anschlüssen 121, 122 für die Signale CAN_H und CAN_L. Ohne einen Betrieb der Emissionsreduktionseinheit 15 wird der Strom I_CAN_H in den Anschluss 121 für die Busader 41 für das Signal CAN_H während der Schaltvorgänge, die aus dem Wechsel zwischen den verschiedenen Zuständen 111, 110 des Sendesignals TxD resultieren, deutlich größer als der Strom I_CAN_L, welcher in den Anschluss 122 für die Busader 42 für das Signal CAN_L fließt. Dies führt zu unterschiedlichen Strömen in einem Auskoppelnetzwerk gemäß Fig. 3 und im Ergebnis zu stark überhöhten Abstrahlpegeln bei der EMV-Zertifizierung.

Um dies zu vermeiden, ist gemäß Fig. 2 an das Gate des P-Kanal-Hochvolt-Stand-Off-Transistors 1252 die Emissionsreduktionseinheit 15 angeschlossen. Die Emissionsreduktionseinheit 15 hat einen Logikblock 151 zum Ein- oder Ausschalten eines niederohmigen Schalters 152 in Form eines N-Kanal-Transistors. Zwischen Gate und Drain des N-Kanal-Transistors 152 ist ein hochohmiger Widerstand 153 schaltbar, der an seinem einen Ende mit dem Gate des P-Kanal-Hochvolt-Stand-Off-Transistors 1252 und an seinem anderen Ende mit Masse verbunden ist. Der Widerstand 153 kann ein einzelner Widerstand sein. Alternativ kann der Widerstand 153 aus mindestens zwei miteinander verschalteten Widerständen gebildet sein.

Die Emissionsreduktionseinheit 15 realisiert eine geschaltete Stand-Off-Vorrichtung im Sendeblock. Hierbei wird je nach Vorgabe des Logikblocks 151 der Einschaltpfad für den N-Kanal-Hochvolt-Stand-Off-Transistor 1252 nieder- oder hochohmig nach Masse geschaltet, wie nachfolgend beschrieben

Für den Fall, dass die Sende-/Empfangseinrichtung 12 in dem Bussystem 1 für die Teilnehmerstation 10 eine empfangende Teilnehmerstation realisieren soll, also nicht selbst sendet, wird das Gate des N-Kanal-Hochvolt-Stand-Off-Transistors 1252 gemäß Vorgabe des Logikblocks 151 über den hochohmigen Widerstand 153 nach Masse verbunden und damit hochohmig nach Masse geschaltet. Somit ist der Widerstand 153 in den Einschaltpfad des Transistors 1252 als Stand-Off-Vorrichtung geschaltet. Als Folge davon wird ein Strom I_CAN_H in den Anschluss 121 für das Bussignal CAN_H bei Schaltvorgängen des Bussignals auf dem Bus 40 stark reduziert. Dadurch wird der Strom I_CAN_H in den Anschluss 121 für das Bussignal CAN_H für den genannten Fall an den Strom I_CAN_L in den Anschluss 122 für das Bussignal CAN_L angepasst.

Für den Fall, dass die Sende-/Empfangseinrichtung 12 in dem Bussystem 1 für die Teilnehmerstation 10 eine sendende Teilnehmerstation realisieren soll und aufgrund eines dominanten Zustands 111 des Sendesignals TxD den Bus 40 für einen dominanten Buszustand treiben soll, würde die hochohmige Gate-Anbindung das Schalt-Zeitverhalten des Bussignals nachteilig beeinträchtigen. Deshalb entscheidet der Logikblock 151 im Falle eines solchen Sendebefehls, dass das Gate des N-Kanal-Hochvolt-Stand-Off-Transistors 1252 mittels des niederohmigen Schalters 152 nach Masse verbunden und damit niederohmig nach Masse geschaltet wird. Somit ist der Schalter 152 in den Einschaltpfad des Transistors 1252 als Stand-Off-Vorrichtung geschaltet. Sollte die Sende-/Empfangseinrichtung 12 sowohl am Ausgang ihres Empfangskomparators 1200 in der Empfangsstufe 120 als auch am Sendesignal TxD einen Rezessiv-Pegel feststellen, so bleibt der Schalter 152 hochohmig, so dass das Gate des N-Kanal-Hochvolt-Stand-Off-Transistors 1252 mittels des niederohmigen Schalters 152 über den Widerstand 153 hochohmig nach Masse gezogen wird.

Somit bewirkt die Sende-/Empfangseinrichtung 12, dass unterschiedliche Ströme I_CAN_H, I_CAN_L kompensiert werden, die von einer deutlich größeren P-Kanal-Stand-off-Vorrichtung, dem Transistor 1252, am Anschluss 121 für die Busader 41 im Vergleich zu einer N- Kanal-Stand-off-Vorrichtung, dem Transistor 1262, am Anschluss 122 für die Busader 42 verursacht werden. Die P- Kanal-Stand-off-Vorrichtung ist deutlich größer als die N- Kanal-Stand-off-Vorrichtung gewählt, damit die beiden Vorrichtungen im eingeschalteten Zustand den gleichen Widerstand Rdson haben. Hierbei wird der Effekt der parasitären Gate-Drain-Kapazitäten 1253, 1263 aufgrund dieser Vorrichtungen 1252, 1262 und aufgrund der Verpolschutzdiode 129 kompensiert, die in dem CANL-Pfad der Sendestufe wegen der Forderung der CAN-Spezifikation von maximalem Rating -27V zwischengeschaltet werden muss.

Mit einem Auskoppelnetzwerk 50 gemäß Fig. 3 an den beiden Busadern 41, 42 des Busses 40 kann die Emission für die Sende-/Empfangseinrichtungen 12, 13 gemessen werden. Das Auskoppelnetzwerk 50 hat eine erste Reihenschaltung aus einem ersten Kondensator 51 und einem ersten Widerstand 52. Der Widerstand 52 ist an seinem anderen Ende mit der ersten Busader 41 für das Bussignal CAN_H verbunden. Außerdem hat das Auskoppelnetzwerk 50 eine zweite Reihenschaltung aus einem zweiten Kondensator 53 und einem zweiten Widerstand 54. Der Widerstand 54 ist an seinem anderen Ende mit der zweiten Busader 42 für das Bussignal CAN_L verbunden. Der erste und zweite Kondensator 51, 53 sind jeweils an ihrem anderen Ende mit einem Widerstand 55 verbunden, der an seinem anderen Ende mit Masse verbunden ist. Zu dem Widerstand 55 ist ein Spannungsmessgerät 58 parallel geschaltet.

Wie in Fig. 3 gezeigt, ist der Bus 40 mit dem Widerstand 48 zwischen den beiden Busadern 41, 42 terminiert. Von einem Anschluss 60 wird eine Spannung V_CAN_Supply für die Sende-/Empfangseinrichtungen 12, 13 eingespeist.

Die Sende-/Empfangseinrichtungen 12 der Teilnehmerstationen 10, 30 sind jeweils an dem Anschluss 121 an die Busader 41 angeschlossen. Außerdem sind die Sende-/Empfangseinrichtungen 12 jeweils an dem Anschluss 122 an die Busader 42 angeschlossen. Die Anschlüsse 123, 124 der Sende-/Empfangseinrichtung 12 sind belegt, wie zuvor in Bezug auf Fig. 2 beschrieben.

In ähnlicher Weise ist die Sende-/Empfangseinrichtung 13 der Teilnehmerstation 20 an einem Anschluss 131 an die Busader 41 angeschlossen. Außerdem ist die Sende-/Empfangseinrichtung 13 an einem Anschluss 132 an die Busader 42 angeschlossen. An einem Anschluss 133 wird die Spannung V_CAN_Supply für die Sende-/Empfangseinrichtung 13 eingespeist. An einem Anschluss 134 ist die Sende-/Empfangseinrichtung 12 mit der Masse des Bussystems 1, insbesondere CAN_GND, verbunden.

Der in Fig. 3 gezeigte und zuvor beschriebene Aufbau entspricht dem Aufbau, der in dem Dokument "IEC TS 62228 Integrated circuits - EMC evaluation of CAN transceivers" bei der EMV-Messung festgeschrieben ist. Somit werden drei Sende-/Empfangseinrichtungen 12, 13 am gleichen CAN-Bus 40 mit einem gemeinsamen Abschlusswiderstand 48 mit einem Widerstandswert von 60Ohm und dem Auskoppelnetzwerk 50 betrieben. Eine der Sende-/Empfangseinrichtungen 12 sendet, gesteuert über ein Sendesignal TxD1, die anderen Sende-/Empfangseinrichtungen 12, 13 befinden sich im gleichen Betriebsmodus, senden jedoch kein dominantes Bit oder keinen dominanten Signalzustand, so dass ihre jeweiligen Sendesignale TxD2, TxD3 high = rezessiv sind. Fig. 3 zeigt ein spezielles Beispiel hierfür.

Durch die jeweilige Emissionsreduktionseinheit 15 in den Sende-/Empfangseinrichtungen 12 wird der reduzierte Strom I_CAN_H hervorgerufen, der an den kleineren Strom I_CAN_L in die Buspins bzw. Anschlüsse 121, 122, 131, 132 der beiden empfangenden Sende-/Empfangseinrichtungen 12, 13 angeglichen ist, wie zuvor in Bezug auf die Sende-/Empfangseinrichtung 12 beschrieben.

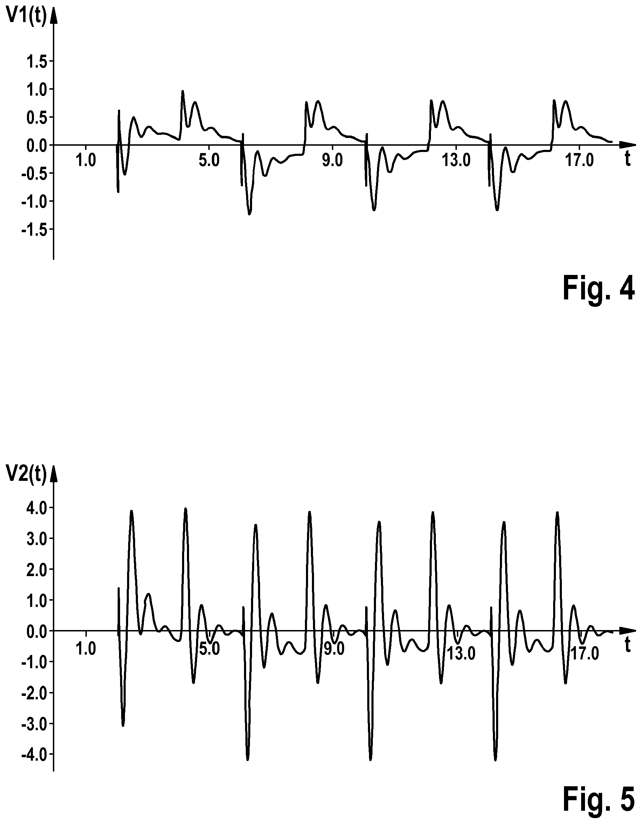

Die resultierende Emission in Bezug auf die Sende-/Empfangseinrichtung 12 ist in Fig. 4 als Funktion der transienten Auskoppelspannung V1(t) über der Zeit t gezeigt. Zudem ist in Fig. 5 zum Vergleich die transiente Auskoppelspannung V2(t) über der Zeit t für die Sende-/Empfangseinrichtung 13 dargestellt, welche keine Emissionsreduktionseinheit 15 aufweist. Der Signalverlauf gemäß Fig. 5 weist hohe Amplituden im Bereich der Resonanzfrequenz einer Gleichtaktdrossel auf. Der Signalverlauf gemäß Fig. 4 dagegen zeigt deutlich verringerte Amplituden, nämlich um den Faktor 3 bis 4 verringerte Amplituden.

Somit können mit der Emissionsreduktionseinheit 15 in der Sende-/Empfangseinrichtung 12 die Ströme I_CAN_H, I_CAN_L in die Anschlüsse 121, 122 im Auskoppelnetzwerk 50 deutlich angeglichen werden. Im Ergebnis ist die Emission der beiden Sende-/Empfangseinrichtungen 12 gemäß Fig. 4 deutlich geringer als die Emission der Sende-/Empfangseinrichtung 13 gemäß Fig. 5. Somit kommt es bei der EMV-Zertifizierung und auch im späteren Betrieb für die Sende-/Empfangseinrichtung 12 nicht zu den stark überhöhten Abstrahlpegeln, die bei der Sende-/Empfangseinrichtung 13 gemäß Fig. 5 messbar sind.

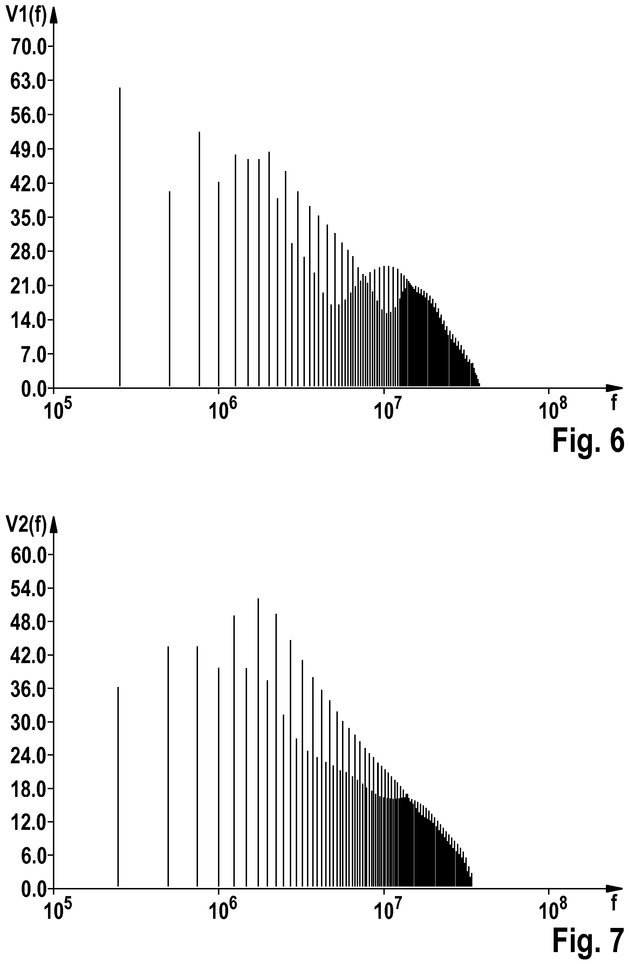

Die Auswirkungen auf das Frequenzspektrum sind in Fig. 6 für die jeweiligen Sende-/Empfangseinrichtungen 12 und in Fig. 7 für die Sende-/Empfangseinrichtung 13 dargestellt. Gemäß Fig. 7 wird für die Sende-/Empfangseinrichtung 13 die Anforderung von 55dBµV im Bereich von 750kHz bis 10MHz massiv verletzt. Im Vergleich dazu kann mit den jeweiligen Sende-/Empfangseinrichtungen 12 die Anforderung erfüllt werden, wie aus Fig. 6 ablesbar.

Mit der Sende-/Empfangseinrichtung 12 wird somit mit Hilfe der Emissionsreduktionseinheit 15 ein Verfahren zur Reduktion von leitungsgebundenen Emissionen ausgeführt.

Gemäß einem zweiten Ausführungsbeispiel kann die Größe des N-Kanal-Hochvolt-Stand-Off-Transistors 1252 verringert werden, was die Koppelkapazität 1253 verringert. Dies ist stark limitiert aufgrund der Verlustleistungsbetrachtung im Falle eines Kurzschlusses zu beispielsweise der Batterie eines Fahrzeugs am Bus 40. Außerdem ist infolgedessen zur Einhaltung der Sendepegel-Toleranz der CMOS-Teil (CMOS = Complementary Metal-Oxide-Semiconductor = sich ergänzender Metall-Oxid-Halbleiter) des N-Kanal-Hochvolt-Stand-Off-Transistors 1252 zu vergrößern.

Alle zuvor beschriebenen Ausgestaltungen der Emissionsreduktionseinheit 15 der Sende-/Empfangseinrichtungen 12, der Teilnehmerstationen 10, 30, des Bussystems 1 und des darin ausgeführten Verfahrens gemäß dem ersten und zweiten Ausführungsbeispiel können einzeln oder in allen möglichen Kombinationen Verwendung finden. Zusätzlich sind insbesondere folgende Modifikationen denkbar.

Das zuvor beschriebene Bussystem 1 gemäß dem ersten und zweiten Ausführungsbeispiel ist anhand eines auf dem CAN-Protokoll basierenden Bussystems beschrieben. Das Bussystem 1 gemäß dem ersten und/oder zweiten Ausführungsbeispiel kann jedoch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf den Bus 40 oder einen gemeinsamen Kanal des Busses 40 gewährleistet ist.

Das Bussystem 1 gemäß dem ersten und/oder zweiten Ausführungsbeispiel und deren Modifikationen ist insbesondere ein CAN-Netzwerk oder ein CAN-HS-Netzwerk oder ein CAN FD-Netzwerk oder ein FlexRay-Netzwerk. Das Bussystem 1 kann jedoch ein anderes serielles Kommunikationssetzwerk sein.

Die Anzahl und Anordnung der Teilnehmerstationen 10, 20, 30 in dem Bussystem 1 gemäß dem ersten und zweiten Ausführungsbeispiel und deren Modifikationen ist beliebig. Insbesondere können nur Teilnehmerstationen 10 oder Teilnehmerstationen 20 oder Teilnehmerstationen 30 in den Bussystemen 1 des ersten oder zweiten Ausführungsbeispiels vorhanden sein. Unabhängig davon können nur Emissionsreduktionseinheiten 15 vorhanden sein, die gemäß einer der zuvor verschiedenen Ausgestaltungsvarianten ausgestaltet sind.

Die Funktionalität der zuvor beschriebenen Ausführungsbeispiele lässt sich in einem Transceiver bzw. einer Sende-/Empfangseinrichtung 12, 13 bzw. Transceiver oder einem CAN-Transceiver oder einem Transceiver-Chipsatz oder einem CAN-Transceiver-Chipsatz, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Sende-/Empfangseinrichtung (12) für ein Bussystem (1), mit
einer Sendestufe zum Senden eines Sendesignals (TxD) an eine erste Busader (41) eines Busses (40) des Bussystems (1), bei welchem Bussystem (1) zumindest zeitweise ein exklusiver, kollisionsfreier Zugriff einer Teilnehmerstation (10, 20, 30) auf den Bus (40) des Bussystems (1) gewährleistet ist, und zum Senden des Sendesignals (TxD) an eine zweite Busader (42) des Busses (40), wobei die Sendestufe in einem ersten Sendeblock (125) zum Senden des Sendesignals (TxD) an die erste Busader (41) einen Niedervolt-PMOS-Transistor (1251) und einen P-Kanal-Hochvolt-Stand-Off-Transistor (1252) aufweist, die in Reihe geschaltet sind, und wobei der P-Kanal-Hochvolt-Stand-Off-Transistor (1252) eine erste Stand-Off-Vorrichtung (1252) in der Sendestufe ist,
einer Empfangsstufe (120) zum Empfangen des auf den Busadern (41, 42) übertragenen Bussignals (CAN_H, CAN_L), und
einer Emissionsreduktionseinheit (15) zur Steuerung des wirksamen Widerstands zur Masse für einen Einschaltpfad der ersten Stand-Off-Vorrichtung (1252) in der Sendestufe abhängig davon, ob ein dominanter Zustand (111) des Sendesignals (TxD) auftritt oder nicht.

2. Sende-/Empfangseinrichtung (12) nach Anspruch 1,
wobei die Emissionsreduktionseinheit (15) einen Widerstand (153) aufweist, der an einem Ende mit einem Gate der ersten Stand-Off-Vorrichtung (1252) und an seinem anderen Ende mit Masse verbunden ist, und
wobei die Emissionsreduktionseinheit (15) zur Steuerung des wirksamen Widerstands zur Masse für den Einschaltpfad der ersten P-Kanal-Stand-Off-Vorrichtung (1252) ausgestaltet ist, den Widerstand (153) und einen niederohmigeren Schalter (152) zu verwenden.

3. Sende-/Empfangseinrichtung (12) nach Anspruch 1 oder 2,
wobei die Sendestufe einen zweiten Sendeblock (126) zum Senden des Sendesignals (TxD) an die zweite Busader (42) aufweist.

4. Sende-/Empfangseinrichtung (12) nach einem der vorangehenden Ansprüche, wobei die Emissionsreduktionseinheit (15) zur Steuerung des Gates des P-Kanal-Stand-Off-Transistors (1252) ausgestaltet ist.

5. Sende-/Empfangseinrichtung (12) nach Anspruch 3 oder 4, wobei in dem zweiten Sendeblock (126) eine zweite Stand-Off-Vorrichtung (1262) vorgesehen ist, die kleiner ist als die erste Stand-Off-Vorrichtung (1252), die in dem ersten Sendeblock (125) vorgesehen ist.

6. Sende-/Empfangseinrichtung (12) nach Anspruch 5, wobei die zweite Stand-Off-Vorrichtung (1262) ein N-Kanal-Stand-Off-Transistor (1262) ist.

7. Sende-/Empfangseinrichtung (12) nach einem der vorangehenden Ansprüche, wobei die Emissionsreduktionseinheit (15) aufweist
einen Logikblock (151) zum Auswerten des Sendesignals (TxD) und eines von dem Bus (40) empfangenen Signals (CAN_H, CAN_L), und
einen Schalter (152) zum Schalten des Gates der ersten Stand-Off-Vorrichtung (1252) abhängig von dem Auswerteergebnis des Logikblocks (151) derart, dass das Gate der ersten Stand-Off-Vorrichtung (1252) entweder mittels des Schalters (152) niederohmig nach Masse gezogen wird oder über den Widerstand (153) hochohmig nach Masse gezogen wird.

8. Sende-/Empfangseinrichtung (12) nach Anspruch 7,
wobei der Logikblock (151) ausgestaltet ist, den Schalter (152) anzusteuern, den Einschaltpfad der ersten Stand-Off-Vorrichtung (1252) niederohmig nach Masse zu ziehen, wenn ein dominanter Zustand (111) des Sendesignals (TxD) auftritt, und
wobei der Logikblock (151) ausgestaltet ist, den Schalter (152) anzusteuern, den Einschaltpfad der ersten Stand-Off-Vorrichtung (1252) hochohmig nach Masse zu ziehen, wenn ein rezessiver Zustand (110) des Sendesignals (TxD) auftritt und die Sende-/Empfangseinrichtung (12) für eine empfangende jedoch nicht sendende Teilnehmerstation (10) betrieben wird.

9. Sende-/Empfangseinrichtung (12) nach Anspruch 7 oder 8,
wobei der Schalter (152) ein Transistor ist, der einen niederohmigeren Widerstandswert hat als der Widerstand (153), und
wobei der Ausgang des Logikblocks (151) an das Gate des Transistors angeschlossen ist.

10. Sende-/Empfangseinrichtung (12) nach einem der vorangehenden Ansprüche, wobei die Sende-/Empfangseinrichtung (12) eine CAN FD Sende-/Empfangseinrichtung (12) ist.

11. Bussystem (1), mit
einem Bus (40), und
mindestens zwei Teilnehmerstationen (10; 20; 30), welche über den Bus (40) derart miteinander verbunden sind, dass sie miteinander kommunizieren können,
wobei mindestens eine der mindestens zwei Teilnehmerstationen (10; 20; 30) eine Sende-/Empfangseinrichtung (12) nach einem der vorangehenden Ansprüche aufweist.

12. Verfahren zur Reduktion von leitungsgebundenen Emissionen, wobei das Verfahren mit einer Sende-/Empfangseinrichtung (12) für ein Bussystem (1) ausgeführt wird, bei welchem zumindest zeitweise ein exklusiver, kollisionsfreier Zugriff einer Teilnehmerstation (10, 20, 30) auf einen Bus (40) des Bussystems (1) gewährleistet ist, wobei die Sende-/Empfangseinrichtung (12) eine Sendestufe, eine Empfangsstufe (120) und eine Emissionsreduktionseinheit (15) aufweist, wobei das Verfahren die Schritte aufweist,
Senden, mit der Sendestufe, eines Sendesignals (TxD) an eine erste Busader (41) des Busses (40), wobei die Sendestufe in einem ersten Sendeblock (125) zum Senden des Sendesignals (TxD) an die erste Busader (41) einen Niedervolt-PMOS-Transistor (1251) und einen P-Kanal-Hochvolt-Stand-Off-Transistor (1252) aufweist, die in Reihe geschaltet sind, und wobei der P-Kanal-Hochvolt-Stand-Off-Transistor (1252) eine erste Stand-Off-Vorrichtung (1252) in der Sendestufe ist,
Senden des Sendesignals (TxD) an eine zweite Busader (42) des Busses (40),
Empfangen, mit der Empfangsstufe (120), des auf den Busadern (41, 42) übertragenen Bussignals (CAN_H, CAN_L), und
Steuern, mit der Emissionsreduktionseinheit (15), des wirksamen Widerstands zur Masse für einen Einschaltpfad der ersten Stand-Off-Vorrichtung (1252) in der Sendestufe abhängig davon, ob ein dominanter Zustand (111) des Sendesignals (TxD) auftritt oder nicht.

## Claims

1. Transmission/reception apparatus (12) for a bus system (1), having
a transmission stage for transmitting a transmission signal (TxD) to a first bus wire (41) of a bus (40) of the bus system (1), in which bus system (1) exclusive collision-free access by a subscriber station (10,20,30) to the bus (40) of the bus system (1) is ensured at least intermittently, and for transmitting the transmission signal (TxD) to a second bus wire (42) of the bus (40), wherein the transmission stage has, in a first transmission block (125) for transmitting the transmission signal (TxD) to the first bus wire (41), a low-voltage PMOS transistor (1251) and a P-channel high-voltage stand-off transistor (1252), which are connected in series, and wherein the P-channel high-voltage stand-off transistor (1252) is a first stand-off device (1252) in the transmission stage,
a reception stage (120) for receiving the bus signal (CAN_H, CAN_L) transmitted on the bus wires (41, 42), and
an emission reduction unit (15) for controlling the effective resistance with respect to earth for a turn-on path of the first stand-off device (1252) in the transmission stage on the basis of whether or not a dominant state (111) of the transmission signal (TxD) occurs.

2. Transmission/reception apparatus (12) according to Claim 1,
wherein the emission reduction unit (15) has a resistor (153), one end of which is connected to a gate of the first stand-off device (1252) and the other end of which is connected to earth, and
wherein the emission reduction unit (15) is designed to control the effective resistance with respect to earth for the turn-on path of the first P-channel stand-off device (1252) by using the resistor (153) and a lower-impedance switch (152).

3. Transmission/reception apparatus (12) according to Claim 1 or 2,
wherein the transmission stage has a second transmission block (126) for transmitting the transmission signal (TxD) to the second bus wire (42).

4. Transmission/reception apparatus (12) according to one of the preceding claims, wherein the emission reduction unit (15) is designed to control the gate of the P-channel stand-off transistor (1252).

5. Transmission/reception apparatus (12) according to Claim 3 or 4, wherein there is provision in the second transmission block (126) for a second stand-off device (1262), which is smaller than the first stand-off device (1252) provided in the first transmission block (125) .

6. Transmission/reception apparatus (12) according to Claim 5, wherein the second stand-off device (1262) is an N-channel stand-off transistor (1262).

7. Transmission/reception apparatus (12) according to one of the preceding claims, wherein the emission reduction unit (15) has
a logic block (151) for evaluating the transmission signal (TxD) and a signal (CAN_H, CAN_L) received from the bus (40), and
a switch (152) for switching the gate of the first stand-off device (1252) on the basis of the evaluation result of the logic block (151) in such a way that the gate of the first stand-off device (1252) is either pulled to earth at low impedance by means of the switch (152) or pulled to earth at high impedance via the resistor (153).

8. Transmission/reception apparatus (12) according to Claim 7,
wherein the logic block (151) is designed to actuate the switch (152) to pull the turn-on path of the first stand-off device (1252) to earth at low impedance if a dominant state (111) of the transmission signal (TxD) arises, and
wherein the logic block (151) is designed to actuate the switch (152) to pull the turn-on path of the first stand-off device (1252) to earth at high impedance if a recessive state (110) of the transmission signal (TxD) arises and the transmission/reception apparatus (12) is operated for a subscriber station (10) that receives but does not transmit.

9. Transmission/reception apparatus (12) according to Claim 7 or 8,
wherein the switch (152) is a transistor that has a lower resistance value than the resistor (153), and wherein the output of the logic block (151) is connected to the gate of the transistor.

10. Transmission/reception apparatus (12) according to one of the preceding claims, wherein the transmission/reception apparatus (12) is a CAN FD transmission/reception apparatus (12).

11. Bus system (1), having
a bus (40), and
at least two subscriber stations (10; 20; 30), which are connected to one another via the bus (40) in such a way that they are able to communicate with one another, wherein at least one of the at least two subscriber stations (10; 20; 30) has a transmission/reception apparatus (12) according to one of the preceding claims.

12. Method for reducing line-conducted emissions, wherein the method is carried out using a transmission/reception apparatus (12) for a bus system (1) in which exclusive collision-free access by a subscriber station (10,20,30) to a bus (40) of the bus system (1) is ensured at least intermittently, wherein the transmission/reception apparatus (12) has a transmission stage, a reception stage (120) and an emission reduction unit (15), the method comprising the steps of
transmitting, using the transmission stage, a transmission signal (TxD) to a first bus wire (41) of the bus (40), wherein the transmission stage has, in a first transmission block (125) for transmitting the transmission signal (TxD) to the first bus wire (41), a low-voltage PMOS transistor (1251) and a P-channel high-voltage stand-off transistor (1252), which are connected in series, and wherein the P-channel high-voltage stand-off transistor (1252) is a first stand-off device (1252) in the transmission stage, transmitting the transmission signal (TxD) to a second bus wire (42) of the bus (40),
receiving, using the reception stage (120), the bus signal (CAN_H, CAN_L) transmitted on the bus wires (41, 42), and
controlling, using the emission reduction unit (15), the effective resistance with respect to earth for a turn-on path of the first stand-off device (1252) in the transmission stage on the basis of whether or not a dominant state (111) of the transmission signal (TxD) occurs.

## Revendications

1. Dispositif d'émission/réception (12) pour un système de bus (1), comprenant
un étage d'émission pour émettre un signal d'émission (TxD) à un premier fil de bus (41) d'un bus (40) du système de bus (1), dans lequel système de bus (1) un accès exclusif, sans collision, d'une station périphérique (10, 20, 30) au bus (40) du système de bus (1) est assuré au moins temporairement, et pour émettre le signal d'émission (TxD) à un deuxième fil de bus (42) du bus (40), dans lequel, pour émettre le signal d'émission (TxD) au premier fil de bus (41), l'étage d'émission présente dans un premier bloc d'émission (125) un transistor PMOS basse tension (1251) et un transistor de veille haute tension de canal P (1252) qui sont connectés en série, et dans lequel le transistor de veille haute tension de canal P (1252) est un premier dispositif de veille (1252) à l'étage d'émission,
un étage de réception (120) pour recevoir le signal de bus (CAN_H, CAN_L) transmis sur les fils de bus (41, 42), et
une unité de réduction d'émissions (15) pour commander à la masse la résistance effective pour un chemin d'enclenchement du premier dispositif de veille (1252) à l'étage d'émission en fonction du fait qu'un état dominant (111) du signal d'émission (TxD) apparaît ou non.

2. Dispositif d'émission/réception (12) selon la revendication 1,
dans lequel l'unité de réduction d'émissions (15) présente une résistance (153) qui est reliée à une extrémité à une grille du premier dispositif de veille (1252) et est reliée à son autre extrémité à la masse, et
dans lequel, pour commander à la masse la résistance effective pour le chemin d'enclenchement du premier dispositif de veille (1252) de canal P, l'unité de réduction d'émissions (15) est configurée pour utiliser la résistance (153) et un commutateur de plus basse impédance.

3. Dispositif d'émission/réception (12) selon la revendication 1 ou 2, dans lequel l'étage d'émission présente un deuxième bloc d'émission (126) pour émettre le signal d'émission (TxD) au deuxième fil de bus (42).

4. Dispositif d'émission/réception (12) selon l'une quelconque des revendications précédentes, dans lequel l'unité de réduction d'émissions (15) est configurée pour commander la grille du transistor de veille de canal P (1252).

5. Dispositif d'émission/réception (12) selon la revendication 3 ou 4, dans lequel, dans le deuxième bloc d'émission (126), un deuxième dispositif de veille (1262) est prévu qui est plus petit que le premier dispositif de veille (1252) qui est prévu dans le premier bloc d'émission (125).

6. Dispositif d'émission/réception (12) selon la revendication 5, dans lequel le deuxième dispositif de veille (1262) est un transistor de veille de canal N (1262).

7. Dispositif d'émission/réception (12) selon l'une quelconque des revendications précédentes, dans lequel l'unité de réduction d'émissions (15) présente
un bloc logique (151) pour évaluer le signal d'émission (TxD) et un signal (CAN_H, CAN_L) reçu du bus (40), et
un commutateur (152) pour commuter la grille du premier dispositif de veille (1252) en fonction du résultat d'évaluation du bloc logique (151) de telle sorte que la grille du premier dispositif de veille (1252) est soit tirée vers la masse à basse impédance au moyen du commutateur (152), soit tirée vers la masse à haute impédance par l'intermédiaire de la résistance (153) .

8. Dispositif d'émission/réception (12) selon la revendication 7,
dans lequel le bloc logique (151) est configuré pour piloter le commutateur (152) pour tirer vers la masse à basse impédance le chemin d'enclenchement du premier dispositif de veille (1252) si un état dominant (111) du signal d'émission (TxD) apparaît, et
dans lequel le bloc logique (151) est configuré pour piloter le commutateur (152) pour tirer vers la masse à haute impédance le chemin d'enclenchement du premier dispositif de veille (1252) si un état récessif (110) du signal d'émission (TxD) apparaît et le dispositif d'émission/réception (12) fonctionne pour une station périphérique (10) en réception mais pas en émission.

9. Dispositif d'émission/réception (12) selon la revendication 7 ou 8,
dans lequel le commutateur (152) est un transistor qui présente une valeur de résistance à plus basse impédance que la résistance (153), et
dans lequel la sortie du bloc logique (151) est connectée à la grille du transistor.

10. Dispositif d'émission/réception (12) selon l'une quelconque des revendications précédentes, dans lequel le dispositif d'émission/réception (12) est un dispositif d'émission/réception CAN/FD (12).

11. Système de bus (1), comprenant
un bus (40), et
au moins deux stations périphériques (10 ; 20 ; 30) qui sont reliées les unes aux autres par l'intermédiaire du bus (40) de façon à pouvoir communiquer les unes avec les autres,
dans lequel au moins l'une des au moins deux stations périphériques (10 ; 20 ; 30) présente un dispositif d'émission/réception (12) selon l'une quelconque des revendications précédentes.

12. Procédé permettant de réduire des émissions filaires, dans lequel le procédé est exécuté par un dispositif d'émission/réception (12) pour un système de bus (1) dans lequel un accès exclusif, sans collision, d'une station (10, 20, 30) à un bus (40) du système de bus (1) est assuré au moins temporairement, dans lequel le dispositif d'émission/réception (12) présente un étage d'émission, un étage de réception (120) et une unité de réduction d'émissions (15), le procédé présentant les étapes consistant à
émettre, par l'étage d'émission, un signal d'émission (TxD) à un premier fil de bus (41) du bus (40), dans lequel, pour émettre le signal d'émission (TxD) au premier fil de bus (41), l'étage d'émission présente dans un premier bloc d'émission (125) un transistor PMOS basse tension (1251) et un transistor de veille haute tension de canal P (1252) qui sont connectés en série, et dans lequel le transistor de veille haute tension de canal P (1252) est un premier dispositif de veille (1252) à l'étage d'émission,
émettre le signal d'émission (TxD) à un deuxième fil de bus (42) du bus (40),
recevoir, par l'étage de réception (120), le signal de bus (CAN_H, CAN_L) transmis sur les fils de bus (41, 42), et
commander à la masse, par l'unité de réduction d'émissions (15), la résistance effective pour un chemin d'enclenchement du premier dispositif de veille (1252) à l'étage d'émission en fonction du fait qu'un état dominant (111) du signal d'émission (TxD) apparaît ou non.
